Europäisches Patentamt

European Patent Office

Office européen des brevets

(11) Publication number: **0 114 890**
**B1**

# EUROPEAN PATENT SPECIFICATION

(45) Date of publication of patent specification: **18.03.87**

(51) Int. Cl.⁴: **H 04 B 7/08**

(21) Application number: **83902772.9**

(22) Date of filing: **02.08.83**

(86) International application number:
**PCT/US83/01180**

(87) International publication number:
**WO 84/00653 16.02.84 Gazette 84/05**

(54) METHOD AND APPARATUS FOR MEASURING THE STRENGTH OF A RADIO FREQUENCY SIGNAL.

(30) Priority: **03.08.82 US 405123**

(43) Date of publication of application:
**08.08.84 Bulletin 84/32**

(45) Publication of the grant of the patent:
**18.03.87 Bulletin 87/12**

(84) Designated Contracting States:
**AT CH DE FR GB LI NL SE**

(56) References cited:
**DE-A-2 803 356**
**JP-A-56 030 654**
**US-A-3 537 011**
**US-A-3 564 287**
**US-A-3 860 872**
**US-A-3 896 375**
**US-A-3 973 197**
**US-A-4 053 840**
**US-A-4 069 455**
**US-A-4 183 087**
**US-A-4 295 099**

(73) Proprietor: **MOTOROLA, INC.**
**1303 East Algonquin Road**
**Schaumburg, Illinois 60196 (US)**

(72) Inventor: **McLAUGHLIN, Michael, Joseph**
**640 Lakeview Lane**
**Hoffman Estates, IL 60194 (US)**

(74) Representative: **Ibbotson, Harold et al**
**Motorola Ltd Patent and Licensing Operations -**
**Europe Jays Close Viables Industrial Estate**
**Basingstoke Hampshire RG22 4PD (GB)**

## Description

### Related patent applications

The present invention is related to co-pending European patent application No. 83902729.9, entitled "Scanning and Assigning Duplex Radio Channels to Mobile and Portable Radiotelephone in Cellular Radiotelephone Communications System", invented by Larry C. Puhl and Ronald J. Webb, and assigned to same assignee and filed the same date as the present invention.

### Background of the invention

The present invention relates generally to radio frequency (RF) signal strength measuring apparatus, and more particularly to an improved method and apparatus for measuring the strength of an RF signal subject to rapid and deep fading, such as Rayleigh fading.

In the prior art, the strength of RF signals has been determined by averaging a number of samples taken either by an analog meter or an analog-to-digital converter. The resulting signal strength is reasonably accurate as long as the RF signal is not subject to rapid and deep fading. However, if an RF signal is subject to rapid and deep-fading and only a few signal strength samples are taken, a signal strength sample taken during a deep fade will cause a large error in the computed average signal strength. The effects of a sample taken during a deep fade can be alleviated somewhat by taking a large number of samples over a relatively long time interval. However, in radio systems where it is necessary to quickly measure the signal strength of many different RF signals subject to Rayleigh fading, the average of a small number of signal strength samples will not accurately reflect the true average signal strength due to the errors introduced by samples taken during deep fades.

A method in accordance with the prior art portion of claim 1 is disclosed in US—A—3537011. In the method described in this patent only a single sample is taken of the RF signals received by the plurality of antennas. The output of a monitoring receiver is compared with that of the operating receiver and the result used to effect switching to the supposed strongest antenna. This method has the disadvantage that such a single sample may be taken during a Rayleigh fade and switching to a less desirable antenna is likely to occur. This method is therefore not suitable for use where Rayleigh fading occurs.

Accordingly, it is an object of the present invention to provide an improved method and apparatus for accurately measuring in a relatively short time period the strength of an RF signal subject to rapid and deep fading.

It is another object of the present invention to provide an improved method and apparatus for accurately measuring the signal strength of a plurality of RF signals that are being received by a plurality of antennas.

These objects are achieved by the method of the invention having the steps of tuning said receiving means to each of the radio channels in sequence; and
for each radio channel:

i. coupling said receiving means to each antenna in a predetermined sequence;

ii. sampling the receiving means output signal N times while coupled for a predetermined time interval to each antenna, where N is an integer number greater than one; and

iii. after sampling all antennas, selecting the antenna for which at least one of its N samples has a magnitude greater than the magnitude of any of the N samples for all other antennas.

### Brief description of the drawings

Figure 1 is a block diagram of a radio communications system that may advantageously utilize the signal strength measuring apparatus of the present invention.

Figure 2 is a block diagram of a scanning receiver including signal strength measuring apparatus embodying the present invention.

Figure 3 illustrates the envelope of an RF signal that is experiencing Rayleigh fading.

Figure 4 is a flow chart illustrating the signal strength measuring method of the present invention.

### Detailed description of the preferred embodiment

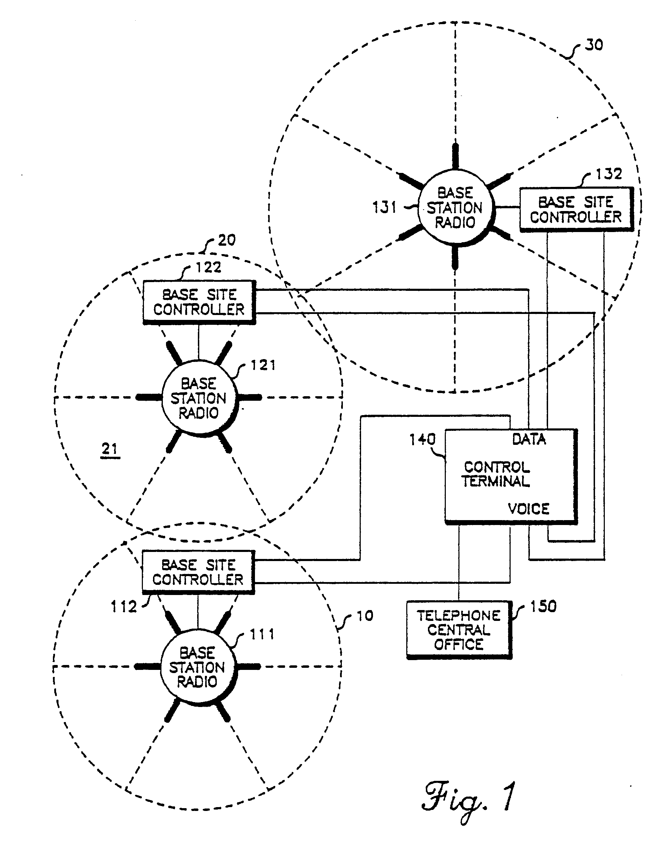

Referring to Figure 1, there is illustrated a cellular radiotelephone communications system of the type described in US patent numbers 3,663,762, 3,906,166; in an experimental cellular radio telephone system application filed under Docket No. 18262 with the Federal Communications Commission by Motorola and American Radio-Telephone Service, Inc. in February 1977; and more recently in a system description entitled "Motorola DYNATAC Cellular Radiotelephone Systems", published by Motorola Inc., Schaumburg, Illinois, in 1982. Such cellular systems can provide telephone coverage to both mobile and portable radiotelephones located throughout a large geographical area. Portable radiotelephones may be of the type described in US patent numbers 3,962,553 and 3,906,166; and mobile radiotelephones may be of the type described in Motorola instruction manual number 68P81039E25, published by Motorola Service Publications, Schaumburg, Illinois, 1979. The geographical area may be subdivided into cells 10, 20 and 30, which each may include a base station radio 111, 121 and 131 and an associated base site controller 112, 122 and 132. Base site controllers 112, 122 and 132 are each coupled by data and voice links to a radio telephone control terminal 140, which may be similar to the terminals described in US patent number 3,663,762, 3,764,915, 3,819,872, 3,906,166 and 4,268,722. These data and voice links may be provided by dedicated wire lines, pulse-code-modulated carrier lines, microwave radio channels, or other suitable communication links. Control terminal 140 is in turn coupled to a conventional telephone central office 150 for completing telephone calls between mobile and portable radiotelephones and landline telephones.

Each base station radio 111, 121 and 131 in Fig. 1 includes a plurality of transmitters and receivers for operating on at least one duplex signalling channel and a plurality of duplex voice channels. Base station 111, 121 and 131 may be of the type described in Motorola instruction manual number 68P81060E30, published by Motorola Service Publications, Motorola Inc., Schaumburg, Illinois, in 1982. Base station radios 111, 121 and 131 are located substantially at the center of each of the corresponding cells 10, 20 and 30. The base station transmitters may be combined onto one omni-directional antenna, while the base station receivers may be intercoupled to two or more directional or omni-directional sector antennas. In Fig. 1, the base station radios 111, 121 and 131 each include six 60° sector antennas. Each sector antenna primarily covers a portion of a cell, such as portion 21 of cell 20, and typically has a coverage area that overlaps the coverage area of adjacent sector antennas. Since the signalling channel requires an omni-directional receiving pattern, the signals received by the six sector antennas may be combined by a maximal ratio predetection diversity combiner, as illustrated and described in the present assignee's patent number US—A—4,369,520 issued 18 January 1983, entitled "Instantaneously Acquiring Sector Antenna System" and invented by Frank J. Cerny, Jr. and James J. Mikulski; and Canadian patent number 1141437 issued 15 February 1983, entitled "Large Dynamic Range Multiplier for a Maximal-Ratio Diversity Combiner", and invented by Frank J. Cerny, Jr. Furthermore, coverage of a portion of a cell may be provided by combining the signals received by two or more of the sector antennas. The sector antennas and associated receiving apparatus may be of the type described in US patent numbers 4,101,836 and 4,317,229.

In order to determine whether or not a mobile or portable radiotelephone leaves one cell, e.g. 20, and enters another, e.g. 10 or 30, the signal strength of the mobile or portable radiotelephone must be monitored by the base site controller 122. When the signal strength of a mobile or portable radiotelephone becomes too weak, the mobile or portable radio telephone can be handed off to a base site controller 112 or 132 in another cell. Hand off involves transferring a particular mobile or portable radiotelephone from a duplex voice channel in one cell to a duplex voice channel in another cell. By utilizing the present invention, the strength of an RF signal can be quickly and accurately measured for each operating mobile and portable radiotelephone so that a particular mobile or portable radiotelephone can be reliably handed off before communications with it are degraded or interrupted due to weak signal conditions.

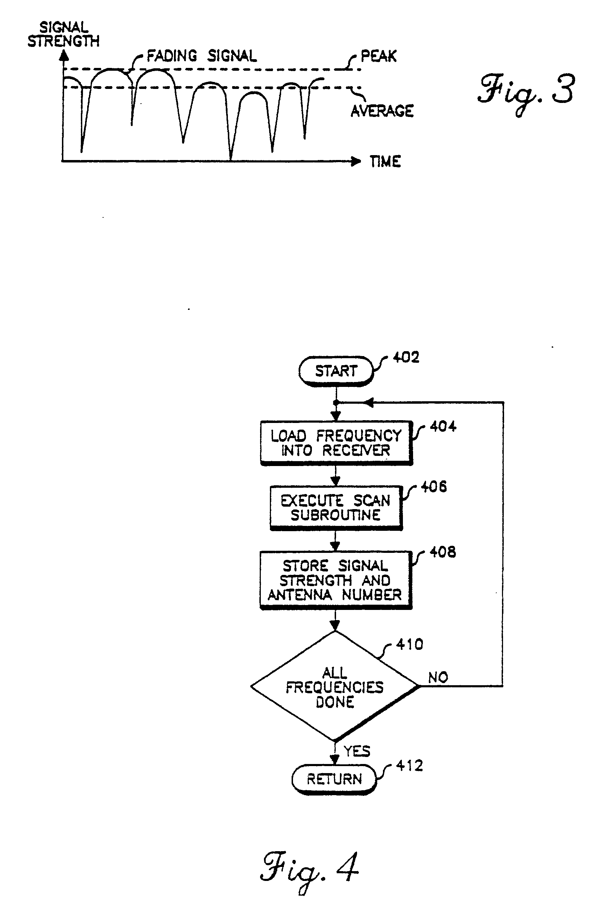

Since the RF signal frequencies utilized in the cellular system in Fig. 1 are typically above 800 mHz, the RF signals are subject to random, deep and rapid fading, commonly referred to as Rayleigh fading. Thus, the problem of accurately determining the strength of RF signals from mobile and portable radiotelephones is complicated not only by the fact that there may be a large number of mobile and portable radiotelephones to monitor, but also by the fact that the RF signal from the mobile and portable radiotelephones is subject to Rayleigh fading. In other words, the base site controllers 112, 122 and 132 must be capable of rapidly and accurately measuring the signal strength from a large number of mobile and portable radiotelephones to prevent communications with them from being unacceptably degraded or interrupted. By utilizing the present invention, a reasonably accurate measure of the signal strength from operating mobile and portable radiotelephones can be obtained by sampling the strength of the RF signal from each mobile and portable radiotelephone at least two times during a predetermined time interval and selecting the sampled signal strength for each that has the largest magnitude. As illustrated by the RF signal envelope in Figure 3, the peak signal strength for each mobile and portable radiotelephone is a reasonably accurate measure of the signal strength since the peak signal strength is relatively close to the true average signal strength. Moreover, the peak signal strength is closer to the true average signal strength than an average of a number of signal strength samples that includes a sample taken in a null. Thus, according to the present invention, a scanning receiver can be coupled to the sector antennas of each base station radio 111, 121 and 131 for periodically measuring the peak signal strength of each operating mobile and portable radiotelephone in each cell 10, 20 and 30.

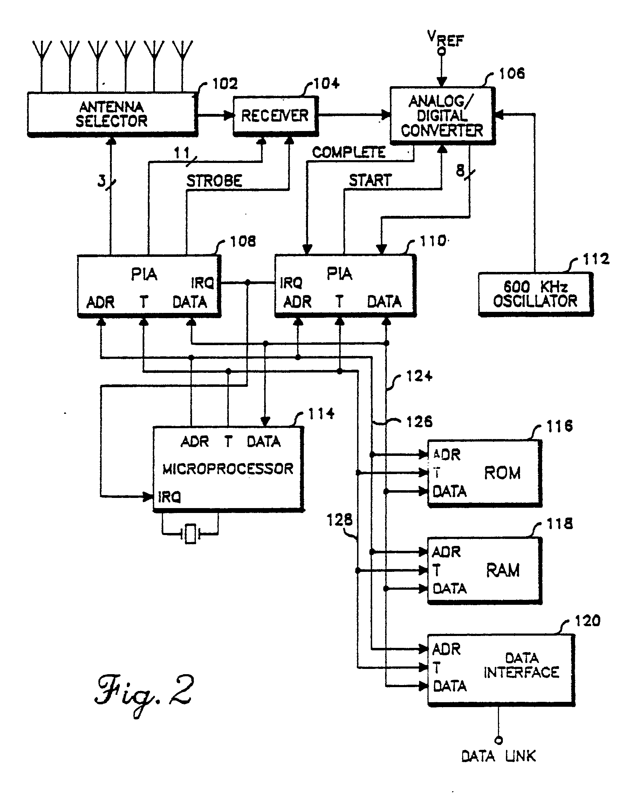

Referring to Figure 2, there is illustrated a scanning receiver embodying the present invention. The scanning receiver may be part of base station radios 111, 121 and 131 in Figure 1. The scanning receiver in Figure 2 includes an antenna selector 102 that is coupled to each of six sector antennas of the base station radio. Binary input signals applied to antenna selector 102 by peripheral interface adapter (PIA) 108 cause antenna selector 102 to couple a selected one of the six sector antennas to receiver 104. The sector antennas and antenna selector 102 may be any conventional apparatus, such as that described in the aforementioned U.S. patent numbers 4,101,836 and 4,317,229.

Receiver 104 may be a conventional synthesized receiver (such as the scanning receiver in the aforementioned Motorola instruction manual No. 68P81060E30), whose frequency of reception may be determined by an eleven-bit data signal applied to receiver 104 by PIA 108. The eleven-bit data signal is strobed into a register (not shown) of receiver 104 by a storage signal from PIA 108. An output from receiver 104, which is proportional to the instantaneous strength of the RF signal being received (e.g., such as the output of an envelope detector), is coupled to analog-to-digital converter (ADC) 106, which converts

3

the magnitude of the receiver output to an eight-bit data signal. ADC 106 is controlled by PIA 110, which applies a start signal to ADC 106 for initiating the analog-to-digital conversion process. ADC 106 is also coupled to 600 kHz oscillator 112, and completes a conversion in approximately 120 microseconds. When the analog-to-digital conversion is complete, a complete signal is applied to PIA 110 by ADC 106. ADC 106 may be any suitable conventional analog-to-digital converter, such as, for example, an ADC0803 manufactured by National Semiconductor Corp.

The operation of the scanning receiver in Figure 2 is controlled by microprocessor 114. Microprocessor 114 may be any suitable conventional microprocessor, such as, for example, a Motorola type MC6800 microprocessor. At predetermined time intervals, microprocessor 114 executes the flow chart in Figure 4 for measuring the signal strength of all active mobile and portable radiotelephones in its cell. Upon completion of the flowchart in Figure 4, microprocessor 114 has measured and stored the signal strength for each active mobile and portable radiotelephone and has determined which of the six sector antennas is receiving the strongest RF signal from each active mobile and portable radiotelephone.

Microprocessor 114 is intercoupled to PIA's 108 and 110, read only memory (ROM) 116, random access memory (RAM) 118 and data interface 120 by way of data bus 124, address bus 126 and timing signals 128. ROM 116 stores a control program including subroutines for measuring the signal strength of active mobile and portable radiotelephones, such as the subroutine in the Appendix hereinbelow. RAM 118 is a scratch pad memory used during execution of the control program and subroutines. Data interface 120 provides a conventional data link between the scanning receiver in Figure 2 and other processing circuitry in the base site controllers 112, 122 and 132 in Figure 1. Microprocessor 114, PIA's 108 and 110, ROM 116, RAM 118, data interface 120 can each be provided by conventional integrated circuit devices, such as those described in the "Motorola Microprocessor Data Manual", published by the MOS Integrated Circuits Group of the Microprocessor Division of Motorola, Inc., Austin, Texas in 1981. For example, microprocessor 114 may be a Motorola type MC6800 microprocessor, PIA's 108 and 110 a Motorola type MC6821 peripheral interface adapter, ROM 116 a Motorola type MCM68A316 2KX8 ROM, RAM 118 two Motorola type MCM2114 1KX4 RAM's, and data interface 120, a Motorola type MC6850 or MC6852 data adapter.

Referring to Figure 4, a flow chart of the control program for microprocessor 114 in Figure 2 is illustrated. The flow chart may be executed periodically with all of the transmitting frequencies of active mobile and portable radiotelephones. Entering at START block 402, and proceeding to block 404, one of the active frequencies is loaded into receiver 104 in Figure 2. Next, at Block 406, the SCAN subroutine in the Appendix hereinbelow is executed. The SCAN subroutine samples each sector antenna a number of times determined by the variable COUNT and stores the largest sample for each sector antenna sequentially beginning at address IDAT. The scanning is repeated twenty-five times to provide some time diversity between signal strength measurements for each sector antenna. Then, at block 408, the sector antenna having the largest sample is identified by comparing the six samples stored at addresses IDAT, IDAT+1, IDAT+2, IDAT+3, IDAT+4 and IDAT+5. The selected sector antenna and its sampled signal strength may be stored in a location associated with the mobile or portable radiotelephone operating on the particular frequency. Next, at decision block 410, a check is made to see if all operating frequencies have been scanned. If all operating frequencies have been scanned, YES branch is taken to RETURN block 412. Otherwise, NO branch is taken to block 404 for scanning the next operating frequency.

In summary, an improved method and apparatus for accurately measuring in a relatively short period of time the strength of an RF signal subject to Rayleigh fading has been described. The inventive method and apparatus is particularly well adapted for use in cellular radiotelephone systems, where it necessary to quickly and accurately measure the signal strength of mobile and portable radiotelephones so that communications with them can be maintained as they move from cell to cell.

Appendix

Table I hereinbelow illustrates a suitable program for the SCAN subroutine referred to in block 406 in the flow chart in Figure 4. The program is coded in mnemonic instructions for the Motorola type MC6800 microprocessor, which mnemonic instructions can be assembled into machine code instructions by a suitable assembler. The nmemonic instructions and operation of the Motorola type MC6800 microprocessor are described in further detail in a publication entitled, "Programming the 6800 Microprocessor", by R. W. Southern, published in 1977 and available from Motorola Semiconductor Products Inc., Literature Distribution Center, P.O. Box 20924, Phoenix, AZ 85036.

# 0 114 890

## TABLE I
### Scan subroutine

```
                          *     THIS SUBROUTINE TAKES SIGNAL STRENGTH MEASURE-
                          *     MENTS FROM SIX SECTOR ANTENNAS AND STORES THE
                          *     LARGEST VALUE FOR EACH SECTOR. TWENTY FIVE
                          *     SCANS THROUGH THE SIX SECTORS ARE TAKEN
                          *

   0100                                     ORG    $100
   D000                    PIA1             EQU    $D000      SIGNAL STRENGTH
                                                             MEASUREMENT
   E002                    PIA2             EQU    $E002      SECTOR SELECTION
   0100                    IDAT             RMB    6          TABLE OF SIGNAL
                                                             STRENGTH MAXIMA
   0106                    COUNT            RMB    2          NO. OF SAMPLES
                                                             PER SECTOR
   0108                    TABAD            RMB    2          DATA ADDRESS IN
                                                             TABLE
   010A                    SECTOR           RMB    1          SECTOR SELECTED
   010B   00  50           DEND             FDB    $50        WAIT INTERVAL
   010D                    CNT              RMB    1          SCAN NUMBER

                          *
                          *     SELECT SECTOR AND KEEP TRACK OF THE NUMBER
                          *     OF SCANS THROUGH SIX SECTORS
                          *

   1000                                     ORG    $1000
   1000   CE  01  00       SCAN             LDX    #IDAT      REGINNING
                                                             ADDRESS
                                                             OF DATA
   1003   FF  01  08                        STX    TABAD
   1006   6F  00                            CLR    X          CLEAR TABLE
                                                             OF MAXIMA
   1008   6F  01                            CLR    1,X
   100A   6F  02                            CLR    2,X
   100C   6F  03                            CLR    3,X
   100E   6F  04                            CLR    4,X
   1010   6F  05                            CLR    5,X
   1012   7F  01  0D                        CLR    CNT
   1015   C6  01                            LDA B  #1         GENERATE FIRST
                                                             SECTOR NUMBER
   1017   20  1B                            BRA    N2
   1019   F6  01  0A       M1               LDA B  SECTOR     CALCULATE NEXT
                                                             SECTOR ADDRESS
   101C   5C                                INC B
   101D   C1  06           M2               CMP B  #6         HAVE ALL SIX
                                                             SECTORS
                                                             BEEN SCANNED
   101F   23  13                            BLS    N2
   1021   CE  01  00                        LDX    #IDAT      REINITIALIZE
                                                             POINTER TO TABLE
   1024   FF  01  08                        STX    TABAD
   1027   7C  01  0D                        INC    CNT        HAVE 25 SCANS
                                                             THROUGH THE
                                                             6 SECTORS BEEN
                                                             COMPLETED?
   102A   B6  01  0D                        LDA A  CNT
   102D   81  19                            CMP A  #25        NO
   102F   2D  01                            BLT    M6
   1031   39                                RTS               YES
   1032   C6  01           M6               LDA B  #1
   1034   F7  01  0A       N2               STA B  SECTOR
   1037   F7  E0  02                        STA B  PIA2       SELECT SECTOR
```

```
103A    CE  00  00              LDX     #0
103D    08              WT      INX                 WAIT FOR COMPLE-
                                                    TION OF SECTOR
                                                    SWITCHING
103E    BC  01  0B              CPX     DEND
1041    26  FA                  BNE     WT

        *
        *       TAKE SIGNAL STRENGTH SAMPLES ON SELECTED
        *       SECTOR AND RETAIN LARGEST VALUE
        *

1043    FE  01  08              LDX     TABAD       GET MAXIMUM FROM
                                                    PREVIOUS SCAN
1046    E6  00                  LDA B   X
1048    FE  01  06              LDX     COUNT
104B    B6  D0  00              LDA A   PIA1        CLEAR INPUT FLAG
104E    B6  D0  01      LOOP    LDA A   PIA1+1      WAIT FOR A/D
                                                    CONVERSION
                                                    COMPLETE
1051    2A  FB                  BPL     LOOP
1053    B6  D0  00              LDA A   PIA1        READ SAMPLE
                                                    VALUE
1056    11                      CBA                 IS NEW SAMPLE

                                                    LARGEST?
1057    23  01                  BLS     N3          NO
1059    16                      TAB                 YES
105A    09              N3      DEX                 HAVE ALL SAMPLES
                                                    BEEN TAKEN?
105B    26  F1                  BNE     LOOP
105D    FE  01  08              LDX     TABAD       STORE LARGEST
                                                    SIGNAL STRENGTH
                                                    SAMPLE VALUE IN
                                                    THE TABLE
1060    E7  00                  STA B   X
1062    08                      INX
1063    FF  01  08              STX     TABAD
1066    7E  10  19              JMP     M1
1069                            END
```

**Claims**

1. A method of determining for each radio channel which of a plurality of antennas is receiving the strongest radio frequency (RF) signal experiencing Rayleigh fading and transmitted from a plurality of remote stations each having an unknown location in a geographical area (10, 20, 30) and transmitting on a different radio channel, each of said antennas receiving RF signals from the geographical area (10, 20, 30) and couplable to receiving means (111, 121, 131) having an output signal, said method characterized by the steps of:

(a) tuning said receiving means (104) to each of the radio channels in sequence; and

(b) for each radio channel:

(i) coupling (404) said receiving means to each antenna in a predetermined sequence;

(ii) sampling (406) the receiving means output signal N times while coupled for a predetermined time interval to each antenna, where N is an integer number greater than one; and

(iii) after sampling all antennas, selecting (408) the antenna for which at least one of its N samples has a magnitude greater than the magnitude of any of the N samples for all other antennas.

2. The method according to claim 1, further characterized by the step of repeating (404, 406, 408) said step (b) after a predetermined time.

3. The method according to claim 1, further characterized by the step of repeating (404, 406, 408) step (b) at consecutive predetermined time intervals.

4. The method according to claim 1, characterized in that said sampling step (ii) further includes the step of converting (406) each sample of the receiving means output signal to a digitized sample.

5. The method according to claim 1, wherein said selecting step (iii) is further characterized by the steps of:

selecting (408) the largest sample for each antenna; and

selecting (408) for communications on the radio channel the antenna whose largest sample has a magnitude greater than the magnitude of the largest samples of all other antennas.

6. Apparatus (112, 122, 132) for determining for each radio channel which of a plurality of antennas is receiving the strongest radio frequency (RF) signal experiencing Rayleigh fading and transmitted from a plurality of remote stations each having an unknown location in a geographical area (10, 20, 30) and transmitting on a different radio channel, each of said antennas receiving RF signals from the geographical area (10, 20, 30) and couplable to receiving means (111, 121, 131) having an output signal, said apparatus characterized by:

means (108) for tuning said receiving means (104) to each of the radio channels in sequence;

means (102, 108) for coupling for each radio channel said receiving means to each antenna in a predetermined sequence;

means (106, 110) for sampling for each radio channel the receiving means output signal N times while coupled for a predetermined time interval to each antenna, where N is an integer number greater than one; and

means (114) for selecting for each radio channel the antenna for which at least one of its N samples has a magnitude greater than the magnitude of any of the N samples for all other antennas.

7. The apparatus according to claim 6, characterized in that said sampling means (106, 110) takes a second set of N samples of the receiving means output signal for each antenna after a predetermined time.

8. The apparatus according to claim 6, characterized in that said sampling means (106, 110) takes additional sets of N samples of the receiving means output signal for each antenna during consecutive predetermined time intervals.

9. The apparatus according to claim 6, characterized in that said sampling means (106, 110) further includes means for converting each sample of the receiving means output signal to a digitized sample.

10. The apparatus according to claim 6, characterized in that said selecting means (114) further includes means for selecting the largest sample for each antenna.


**Patentansprüche**

1. Verfahren zum Ermitteln für jeden Funkkanal, welche aus einer Mehrzahl von Antennen das stärkste Hochfrequenz(HF)-Signal empfängt, das Rayleigh-Fading unterworfen ist und von einer Mehrzahl von entfernten Stationen ausgesendet wird, von denen jede einen unbekannten Standort in einem geographischen Bereich (10, 20, 30) hat und auf einem unterschiedlichen Funkkanal sendet, wobei jede der Antennen HF-Signale aus dem geographischen Bereich (10, 20, 30) empfängt und mit Empfangseinrichtungen (111, 121, 131) verbindbar ist, die ein Ausgangssignal haben, wobei das Verfahren gekennzeichnet ist durch die Schritte:

(a) Abstimmen der Empfangseinrichtung (104) auf jeden der Funkkanäle nacheinander; und

(b) für jeden Funkkanal:

(i) Verbinden (404) der Empfangseinrichtung mit jeder Antenne in einer vorbestimmten Folge;

(ii) Abtasten (406) des Empfangseinrichtungsausgangssignals N-mal, während sie für ein vorbestimmtes Zeitintervall mit jeder der Antennen verbunden ist, wobei N eine ganze Zahl größer als 1 ist; und

(iii) Nach dem Abtasten aller Antennen Auswählen (408) der Antenne für die wenigstens einer ihrer N-Abtastwerte eine Amplitude hat, die größer als die Amplitude aller N-Abtastwerte aller anderen Antennen ist.

2. Verfahren nach Anspruch 1, weiterhin gekennzeichnet durch den Schritt der Wiederholung (404, 406, 408) des Schritts (b) nach einer vorbestimmten Zeit.

3. Verfahren nach Anspruch 1, weiterhin gekennzeichnet durch den Schritt des Wiederholens (404, 406, 408) des Schritts (b) in nachfolgenden vorbestimmten Zeitintervallen.

4. Verfahren nach Anspruch 1, dadurch gekennzeichnet, daß der Abtastschritt (ii) weiterhin umfaßt den Schritt des Umwandelns (406) eines jeden Abtastwertes des Empfangseinrichtungsausgangssignals in einen digitalisierten Abtastwert.

5. Verfahren nach Anspruch 1, bei dem der Auswählschritt (iii) weiterhin gekennzeichnet ist durch die Schritte:

Auswählen (408) des größten Abtastwertes für jede Antenne; und

Auswählen (406) der Verbindungen auf dem Funkkanal der Antenne, deren größter Abtastwert eine Amplitude hat, der größer als die Amplitude der größten Abtastwerte aller anderen Antennen ist.

6. Gerät (112, 122, 132) zum Ermitteln für jeden Funkkanal, welche einer Mehrzahl von Antennen das stärkste Hochfrequenz (HF)-Signal empfängt, das Rayleigh-Fading unterworfen ist und von einer Mehrzahl von entfernten Stationen ausgesendet wird, von denen jede einen unbekannten Standort in einem geographischen Bereich (10, 20, 30) hat und auf einem unterschiedlichen Funkkanal sendet, wobei der Antennen HF-Signale aus dem geographischen Bereich (10, 20, 30) empfängt und mit Empfangseinrichtungen (111, 121, 131) verbindbar ist, die ein Ausgangssignal haben, wobei das Gerät gekennzeichnet ist durch:

7

eine Einrichtung (108) zum Abstimmen der Empfangseinrichtung (104) auf jeden der Funkkanäle nacheinander;

eine Einrichtung (102, 108) zum Verbinden für jeden Funkkanal der Empfangseinrichtung mit jeder der Antennen in einer vorbestimmten Folge;

eine Einrichtung (106, 110) zum Abtasten für jeden Funkkanal des Empfangseinrichtungs-Ausgangssignals N-mal, während sie für ein vorbestimmtes Zeitintervall mit jeder der Antennen verbunden ist, wobei N eine ganze Zahl größer als 1 ist; und

eine Einrichtung (114) zum Auswählen für jeden Funkkanal der Antenne, für die wenigstens einer ihrer N Abtastwerte eine Amplitude hat, die größer als die Amplitude jedes der N Abtastwerte aller anderen Antennen ist.

7. Gerät nach Anspruch 6, dadurch gekennzeichnet, daß die Abtasteinrichtung (106, 110) einen zweiten Satz von N Abtastwerten des Empfangseinrichtungs-Ausgangssignals für jede Antenne nach einer vorbestimmten Zeit nimmt.

8. Gerät nach Anspruch 6, dadurch gekennzeichnet, daß die Abtasteinrichtung (106, 110) zusätzliche Sätze von N Abtastwerten des Empfangseinrichtungs-Ausgangssignals für jede Antenne während nachfolgender vorbestimmter Zeitintervalle nimmt.

9. Gerät nach Anspruch 6, dadurch gekennzeichnet, daß die Abtasteinrichtung (106, 110) weiterhin eine Einrichtung zum Umwandeln jedes Abtastwertes des Empfangseinrichtungs-Ausgangssignals in einen digitalisierten Abtastwert enthält.

10. Gerät nach Anspruch 6, dadurch gekennzeichnet, daß die Wähleinrichtung (114) weiterhin eine Einrichtung zum Auswählen des größten Abtastwertes für jede Antenne umfaßt.

**Revendications**

1. Procédé de détermination, pour chaque canal radioélectrique, celle parmi plusieurs antennes qui reçoit le signal à haute fréquence (HF) le plus fort, présentant un évanouissement de Rayleigh et émis par plusieurs stations éloignées se trouvant chacune dans une position inconnue dans une zone géographique (10, 20, 30) et émettant sur un canal radioélectrique différent, chacune desdites antennes recevant des siganux (HF) de la zone géographique (10, 20, 30) et pouvant être couplée avec un dispositif de réception (111, 121, 131) avec un signal de sortie, procédé caractérisé en ce qu'il consiste:

(a) à accorder ledit dispositif récepteur (104) séquentiellement sur chacun desdits canaux radioélectriques; et

(b) pour chaque canal radioélectrique:

(1) à coupler (404) ledit dispositif de réception avec chaque antenne dans une séquence prédéterminée;

(2) à échantillonner (406) le signal de sortie du dispositif de réception N fois pendant qu'il est couplé dans un intervalle de temps prédéterminé avec chaque antenne, où N est un nombre entier supérieur à l'unité; et

(3) après l'échantillonnage de toutes les antennes, à sélectionner (408) l'antenne pour laquelle l'un au moins des N échantillons a une amplitude supérieure à l'amplitude de l'un quelconque des N échantillons pour toutes les autres antennes.

2. Procédé selon la revendication 1, caractérisé en outre en ce qu'il consiste à répéter (404, 406, 408) ladite opération (b) après un temps prédéterminé.

3. Procédé selon la revendication 1, caractérisé en ce qu'il consiste en outre à répéter (404, 406, 408) l'opération (b) à des intervalles de temps prédéterminés et consécutifs.

4. Procédé selon la revendication 1, caractérisé en ce que l'opération d'échantillonnage (2) consiste en outre à convertir (406) chaque échantillon du signal de sortie du dispositif de réception en un échantillon numérisé.

5. Procédé selon la revendication 1, dans lequel ladite opération de sélection (3) est en outre caractérisée en ce qu'elle consiste à sélectionner (408) le plus grand échantillon pour chaque antenne; et à sélectionner (408) pour les communications sur le canal radioélectrique l'antenne dont l'échantillon le plus grand a une amplitude supérieure à l'amplitude des échantillons les plus grands de toutes les autres antennes.

6. Appareil (112, 122, 132) destiné à déterminer, pour chaque canal radioélectrique, celle parmi plusieurs antennes qui reçoit le signal à haute fréquence (HF) le plus fort présentant un évanouissement de Rayleigh et émis par plusieurs postes éloignés ayant chacun une position inconnue dans une zone géographique (10, 20, 30) et émettant sur un canal radioélectrique différent, chacune desdites antennes recevant des signaux (HF) provenant de la zone géographique (10, 20, 30) et pouvant être couplée avec un dispositif de réception (111, 121, 132) avec un signal de sortie, appareil caractérisé en ce qu'il comporte: un dispositif (108) destiné à accorder ledit dispositif de réception (104) séquentiellement sur chacun des canaux radioélectriques; un dispositif (102, 108) destiné à coupler, pour chaque canal radioélectrique, ledit dispositif de réception avec chaque antenne dans une séquence prédéterminée; un dispositif (106, 110) pour échantillonner, pour chaque canal radioélectrique, le signal de sortie du dispositif de réception, N fois pendant qu'il est couplé pendant un intervalle de temps prédéterminé avec chaque antenne, où N est un nombre entier supérieur à l'unité; et un dispositif (114) destiné à sélectionner, pour chaque canal radioélectrique, l'antenne puor laquelle l'un au moins de ces N échantillons a une amplitude supérieure à l'amplitude de l'un quelconque des N échantillons pour toutes les autres antennes.

7. Appareil selon la revendication 6, caractérisé en ce que ledit dispositif d'échantillonnage (106, 110) prélève un second ensemble de N échantillons du signal de sortie du dispositif de réception pour chaque antenne après un temps prédéterminé.

8. Appareil selon la revendication 6, caractérisé en ce que ledit dispositif d'échantillonnage (106, 110) prélève des ensembles supplémentaires de N échantillons du signal de sortie du dispositif de réception pour chaque antenne pendant des intervalles de temps prédéterminés et consécutifs.

9. Appareil selon la revendication 6, caractérisé en ce que ledit dispositif d'échantillonnage (106, 110) comporte en outre un dispositif pour convertir chaque échantillon du signal de sortie du dispositif de réception en un échantillon numérisé.

10. Appareil selon la revendication 6, caractérisé en ce que ledit dispositif de sélection (114) comporte en outre un dispositif pour sélectionner l'échantillon le plus grand pour chaque antenne.

*Fig. 1*

𝓕𝓲𝓰. 2

Fig. 3

Fig. 4